Europäisches Patentamt

European Patent Office

Office européen des brevets

(19)

(11) Veröffentlichungsnummer: **0 451 508 B1**

(12) # EUROPÄISCHE PATENTSCHRIFT

(45) Veröffentlichungstag der Patentschrift: **07.06.95**

(51) Int. Cl.6: **C08F 22/02**, C11D 3/37

(21) Anmeldenummer: **91103537.6**

(22) Anmeldetag: **08.03.91**

(54) **Verfahren zur Herstellung von Homo- und Copolymerisaten monoethylenisch ungesättigter Dicarbonsäuren und ihre Verwendung.**

(30) Priorität: **17.03.90 DE 4008696**

(43) Veröffentlichungstag der Anmeldung:
**16.10.91 Patentblatt 91/42**

(45) Bekanntmachung des Hinweises auf die
Patenterteilung:
**07.06.95 Patentblatt 95/23**

(84) Benannte Vertragsstaaten:
**BE DE FR GB IT NL SE**

(56) Entgegenhaltungen:
**DE-A- 3 233 776**
**DE-A- 3 233 778**
**DE-A- 3 512 223**

(73) Patentinhaber: **BASF Aktiengesellschaft**
**Carl-Bosch-Strasse 38**
**D-67063 Ludwigshafen (DE)**

(72) Erfinder: **Denzinger, Walter**
**Wormser Landstrasse 65**
**W-6720 Speyer (DE)**
Erfinder: **Hartmann, Heinrich, Dr.**
**Weinheimer Strasse 46**
**W-6703 Limburgerhof (DE)**
Erfinder: **Raubenheimer, Hans-Juergen**
**Benzstrasse 6**
**W-6834 Ketsch (DE)**
Erfinder: **Kud, Alexander, Dr.**
**Am Hellbrunn 57**
**W-6509 Eppelsheim (DE)**
Erfinder: **Baur, Richard, Dr.**
**Nelkenstrasse 1**
**W-6704 Mutterstadt (DE)**
Erfinder: **Neumann, Hans-Werner**
**Kantstrasse 3**
**W-6838 Reilingen (DE)**
Erfinder: **Stoeckigt, Dieter**
**Koenigstrasse 4**
**W-6700 Ludwigshafen (DE)**

EP 0 451 508 B1

Rank Xerox (UK) Business Services
(3.10/3.09/3.3.3)

## Beschreibung

Aus der EP-B-0075820 ist ein Verfahren zur Herstellung von Copolymerisaten aus monoethylenisch ungesättigten Mono- und Dicarbonsäuren bekannt, bei dem man Monomermischungen aus 10 bis 60 Gew.-% einer monoethylenisch ungesättigten Dicarbonsäure, wie Maleinsäure, und 90 bis 40 Gew.-% einer monoethylenisch ungesättigten Monocarbonsäure mit 3 bis 10 C-Atomen, wie Acrylsäure, in wäßrigem Medium bei einem Neutralisationsgrad von 20 bis 80 % während der Polymerisationsreaktion in wäßrigem Medium bei Temperaturen von 60 bis 150°C unter Verwendung von 0,5 bis 5 Gew.-% eines wasserlöslichen Initiators, bezogen auf die Monomeren, polymerisiert. Nach diesem Verfahren erhält man Copolymerisate mit Restgehalten an nichtpolymerisierter Dicarbonsäure von weniger als 1,5 Gew.-%.

Aus der DE-OS 35 12 223 ist die Herstellung von Homo- und Copolymerisaten der Maleinsäure durch Copolymerisieren von Maleinsäure in einem wäßrigen Medium mit gegebenenfalls anderen wasserlöslichen ethylenisch ungesättigten Monomeren in Gegenwart von Polymerisationsinitiatoren bekannt. Bei diesem Verfahren wird Maleinsäure zunächst mit einem Alkalimetallhydroxid oder Ammoniak im Molverhältnis 100 : 0 bis 100 : 90 neutralisiert und dann durch Zusatz eines Polymerisationsinitiators polymerisiert. Im Verlauf der Polymerisation erfolgt eine weitere Zugabe an Alkalimetallhydroxid oder Ammoniak zum Reaktionsgemisch, so daß das Molverhältnis von Maleinsäure zu Base 100 : 100 bis 100 : 130 beträgt. Die Polymerisation wird dann vervollständigt. Gemäß den Beispielen beträgt das Verhältnis von Maleinsäure zu Natronlauge nach Beendigung der Polymerisation jedoch höchstens 1:1. Die so herstellbaren Polymerisate haben eine enge Molekulargewichtsverteilung und Molekulargewichte in dem Bereich von 200 bis 20.000. Nach den Angaben in der Patentanmeldung ist außerhalb des beschriebenen Neutralisationsbereiches für Maleinsäure keine hohe Polymerisationsrate erreichbar. Die Copolymerisate werden beispielsweise als Scale-Inhibitoren für Boiler- oder Entsalzungseinrichtungen, als Reinigungsmittelbuilder und als Dispergiermittel für anorganische Pigmente verwendet.

Die EP-A-0337694 betrifft ein Verfahren zur Herstellung von Maleinsäurepolymerisaten in der Säureform mit einem Molekulargewicht (Zahlenmittel) von 300 bis 5.000 und einer engen Molekulargewichtsverteilung (Verhältnis $M_W : M_N$ von weniger als 2,5) durch Polymerisieren von Maleinsäure in wäßrigem Medium, gegebenenfalls zusammen mit 50 bis 0,1 Gew.-% anderen wasserlöslichen ethylenisch ungesättigten Monomeren, in Gegenwart von Metallionen (z.B. Eisen-, Vanadium- und Kupferionen) in Mengen von 0,5 bis 500 ppm und Wasserstoffperoxid in Mengen von 8 bis 100 g/mol Monomer. Die so erhältlichen Polymerisate werden als Wasserbehandlungsmittel verwendet. Gemäß den Angaben in Vergleichsbeispielen wird zwar auch eine zu 50 bzw. 23,7 % neutralisierte Maleinsäure in Gegenwart eines Initiatorsystems aus Wasserstoffperoxid und Eisenionen polymerisiert, jedoch fallen dabei Polymerisate mit hohem Restgehalt an Maleinsäure an.

Der vorliegenden Erfindung liegt die Aufgabe zugrunde, ein Verfahren zur Herstellung von Homo- und Copolymerisaten monoethylenisch ungesättigter Dicarbonsäuren zur Verfügung zu stellen, bei dem man bei Gehalten an monoethylenisch ungesättigter Dicarbonsäure von mindestens 65 Gew.-% Polymerisate erhält, die einen Restmonomergehalt an monoethylenisch ungesättigter Dicarbonsäure von höchstens 1,5 Gew.-% aufweisen.

Die Aufgabe wird erfindungsgemäß gelöst mit einem Verfahren zur Herstellung von Homo- und Copolymerisaten monoethylenisch ungesättigter Dicarbonsäuren mit K-Werten von 7 bis 50 (bestimmt nach H. Fikentscher am Na-Salz der Polymerisate bei pH 7 und 25°C in 1 %iger wäßriger Lösung) durch radikalisch initiierte Polymerisation von

(a) monoethylenisch ungesättigten $C_4$- bis $C_8$-Dicarbonsäuren,

(b) Hydroxy-$C_2$- bis $C_4$-Alkylacrylaten und/oder Hydroxy-$C_2$- bis $C_4$-Alkylmethacrylaten und

(c) anderen wasserlöslichen monoethylenisch ungesättigten Monomeren

im Gewichtsverhältnis (a) zu (b) zu (c) von (100 bis 65) : (0 bis 35) : (0 bis 35) in partiell neutralisierter Form in wäßriger Lösung, wenn man den Neutralisationsgrad der Säuregruppen enthaltenden Monomeren während der Polymerisation auf 52 bis 70 % einstellt, wobei der Neutralisationsgrad der Monomeren a) im Fall der Herstellung von Copolymerisaten aus (a) und Säuregruppen enthaltenden Monomeren (c) zu Beginn der Polymerisation bis zu 85 % betragen kann und die Säuregruppen enthaltenden Monomeren (c) dann in nicht neutralisierter Form eingesetzt werden.

Als Monomere der Gruppe (a) kommen monoethylenisch ungesättigte $C_4$- bis $C_8$-Dicarbonsäuren in Betracht. Geeignete Dicarbonsäuren sind beispielsweise Maleinsäure, Fumarsäure, Itaconsäure, Mesaconsäure, Methylenmalonsäure und Citrakonsäure. Selbstverständlich kann man auch die Anhydride der Dicarbonsäuren einsetzen, die beim Auflösen in Wasser in die Dicarbonsäuren übergehen. Geeignete Anhydride dieser Art sind beispielsweise Maleinsäureanhydrid, Itaconsäureanhydrid und Methylenmalonsäureanhyrid. Bevorzugt zum Einsatz gelangende Monomere dieser Gruppe sind Maleinsäure, Fumarsäure und Itaconsäure, wobei vor allem Maleinsäureanhydrid bzw. die daraus beim Auflösen in Wasser entstehende Maleinsäure eingesetzt wird. Die Monomeren der Gruppe (a) werden entweder allein zu Homopolymerisaten oder in Mischung untereinander zu Copolymerisaten sowie auch mit den Monomeren der Gruppen (b) und/oder (c) bei der Herstellung von Copolymerisaten eingesetzt. Im Fall der Herstellung von Copolymerisaten enthalten diese mindestens 65 Gew.-%, vorzugsweise 80 bis 95 Gew.-% an Monomeren der Gruppe (a) einpolymerisiert.

Als Monomere der Gruppe (b) kommen Hydroxy-$C_2$- bis $C_4$-Alkylacrylate und/oder die entsprechenden Methacrylate in Betracht. Verbindungen dieser Art sind beispielsweise 2-Hydroxyethylacrylat, 2-Hydroxyethylmethacrylat, 2-Hydroxypropylacrylat, 3-Hydroxypropylacrylat, 2-Hydroxypropylmethacrylat, 3-Hydroxypropylmethacrylat, 2-Hydroxybutylacrylat, 2-Hydroxybutylmethacrylat, 4-Hydroxybutylacrylat, 4-Hydroxybutylmethacrylat und Mischungen der genannten Hydroxyalkyl(meth)acrylate, wobei von den in Betracht kommenden Hydroxyalkyl(meth)acrylaten sämtliche Isomeren und Isomerengemische als Monomer der Komponente (b) eingesetzt werden können. Vorzugsweise verwendet man aus dieser Gruppe von Monomeren Hydroxyethylacrylat, Hydroxyethylmethacrylat, Hydroxypropylacrylate und Hydroxypropylmethacrylate. Die Monomeren der Gruppe (a) werden mit den Monomeren der Gruppe (b) im Gewichtsverhältnis von (100 bis 65) : (0 bis 35), vorzugsweise von (99 bis 80) : (1 bis 20), copolymerisiert.

Monomere der Gruppe (c) sind andere wasserlösliche monoethylenisch ungesättigte Monomere, die mit den Monomeren (a) und (b) copolymerisierbar sind. Beispiele für Monomere der Gruppe (c) sind $C_3$- bis $C_{10}$-Monocarbonsäuren, wie Acrylsäure, Methacrylsäure, Dimethylacrylsäure, Ethylacrylsäure, Allylessigsäure und Vinylessigsäure. Vorzugsweise verwendet man aus dieser Gruppe von Monomeren Acrylsäure, Methacrylsäure und deren Gemische. Außerdem eignen sich als Monomere (c) Sulfogruppen enthaltende Monomere, wie beispielsweise Vinylsulfonsäure, Allylsulfonsäure, Methallylsulfonsäure, Styrolsulfonsäure, Acrylsäure-3-sulfopropylester, Methacrylsäure-3-sulfopropylester, Acrylamidomethylpropansulfonsäure sowie Phosphonsäuregruppen enthaltende Monomere, wie beispielsweise Vinylphosphonsäure, Allylphosphonsäure und Acrylamidomethylpropanphosphonsäure. Auch säuregruppen-freie wasserlösliche monoethylenisch ungesättigte Monomere können als Monomer der Gruppe (c) bei der Copolymerisation eingesetzt werden, z.B. Amide wie Acrylamid, Methacrylamid, N-Alkylacrylamide mit 1 bis 18 C-Atomen in der Alkylgruppe wie beispielsweise N-Methylacrylamid, N-Dimethylacrylamid, N-tert.-Butylacrylamid und N-Octadecylacrylamid, N-Vinylpyrrolidon, N-Vinylcaprolactam, N-Vinylimidazol, 1-Vinyl-2-methylimidazol, 1-Vinylimidazolin, 1-Vinyl-2-methylvinylimidazolin, N-Vinylformamid, N-Vinyl-N-methylformamid, N-Vinylacetamid, N-Vinyl-2-methylacetamid und Mischungen der genannten Monomeren. Die Monomeren der Gruppe (c) werden entweder allein mit den Monomeren der Gruppe (a) oder zusammen mit den Monomeren der Gruppe (b) der Copolymerisation mit den Monomeren der Gruppe (a) unterworfen. Das Gewichtsverhältnis (a) : (b) : (c) bei der Copolymerisation beträgt (100 bis 65) : (0 bis 35) : (0 bis 35). Sofern Monomere der Gruppe (c) bei der Copolymerisation mitverwendet werden, beträgt die vorzugsweise auf 100 Gew.-Teile Copolymer bezogene Menge 1 bis 20 Gew.-Teile. Vorzugsweise werden aus dieser Gruppe von Monomeren Acrylsäure, Methacrylsäure und Acrylamidomethylpropansulfonsäure eingesetzt.

Zur Modifizierung der Copolymerisate können noch Monomere der Gruppe (d) in Mengen bis zu 5 Gew.-%, bezogen auf die gesamten bei der Polymerisation eingesetzten Monomeren, mitverwendet werden. Bei den Monomeren der Gruppe (d) handelt sich um Vernetzer, wie beispielsweise N,N-Methylenbisacrylamid, Ester von Acrylsäure, Methacrylsäure und Maleinsäure mit mehrwertigen Alkoholen und Polyalkylenglykolen, wobei diese Ester mindestens zwei monoethylenisch ungesättigte Doppelbindungen aufweisen, z.B. Glykoldiacrylat, Glykoldimethacrylat, Glycerintriacrylat, Glycerintrimethacrylat, Polyethylenglykoldiacrylate, die sich von Polyalkylenglykolen eines Molekulargewichts von 96 bis ca. 2.000 ableiten, sowie die entsprechenden Polyethylenglykoldimethacrylate, Polyethylenglykoldimaleinate von Polyethylenglykolen mit Molekulargewichten bis zu 2000, Glykoldimaleinat sowie mindestens zweifach mit Acrylsäure oder Methacrylsäure veresterte Polyole, wie Pentaerythrit und Glucose. Außerdem kommen als Vernetzer Divinylbenzol, Divinyldioxan, Pentaerythritdiallylether und Pentaallylsuccrose in Betracht. Falls bei der Copolymerisation Vernetzer mitverwendet werden, beträgt die hiervon verwendete Einsatzmenge vorzugsweise 0,05 bis 5 Gew.-%, bezogen auf die gesamten Monomeren, die bei der Polymerisation eingesetzt werden.

Um Polymerisate mit besonders niedrigem K-Wert herzustellen, polymerisiert man die Monomeren in Gegenwart von Reglern. Geeignete Regler sind beispielsweise Mercaptoverbindungen, wie Mercaptoethanol, Mercaptopropanol, Mercaptobutanol, Mercaptoessigsäure, Mercaptopropionsäure, Butylmercaptan und Dodecylmercaptan. Als Regler eignen sich außerdem Allylverbindungen wie Allylalkohol, Hydroxylamin, Ameisensäure, Ethylenglykol, Propylenglykol, Polyethylenglykol und Propylenglykol mit Molgewichten bis zu 6000 und sek. Alkohole, wie Isopropanol und sek.-Butanol. Falls die Polymerisation in Gegenwart von Reglern durchgeführt wird, setzt man davon 0,05 bis 20 Gew.-% ein. Es ist selbstverständlich auch möglich, die Polymerisation in Gegenwart von Reglern und den Monomeren der Gruppe (d), den sogenannten Vernetzern, durchzuführen.

Die Monomeren werden einer radikalisch initiierten Polymerisation unterworfen. Als Polymerisationsinitiatoren eignen sich sämtliche Verbindungen, die unter den Polymerisationsbedingungen Radikale bilden, wie z.B. Azoverbindungen und Peroxide. Hierzu gehören auch sogenannte Redoxsysteme. Bevorzugt geeignet sind wasserlösliche Initiatoren, wie Persulfate, z.B. Natriumpersulfat, Kaliumpersulfat und Ammoniumpersulfat, und Wasserstoffperoxid. Besonders in den Fällen, in denen die Polymerisation bei relativ niedrigen Temperaturen vorgenommen wird, ist es vorteilhaft, zur Beschleunigung der Reaktion Redoxinitiatoren einzusetzen. Solche Systeme bestehen aus den üblicherweise in Betracht kommenden Radikale liefernden Verbindungen, wie Peroxiden, Persulfaten oder Percarbonsäuren und enthalten eine reduzierend wirkende Verbindung, wie Natriumhydrogensulfit, Natriumdisulfit, Natriumdithionit, Natriumformaldehydsulfoxylat, Schwefeldioxid, Ascorbinsäure oder Mischungen von reduzierend wirkenden Verbindungen. Auch Schwermetalle, wie Eisen-, Kupfer-, Nickel-, Chrom-, Mangan- und Vanadiumionen können in Form löslicher Salze als Redoxkomponente benutzt werden. Die Schwermetallionen werden in Mengen von 0,1 bis 100, vorzugsweise 0,1 bis 10 ppm zugesetzt. Manchmal ist es vorteilhaft, sowohl Reduktionsmittel als auch Schwermetallionen mitzuverwenden. Sofern Reduktionsmittel im Katalysatorsystem vorhanden sind, beträgt ihre Menge 0,1 bis 10, vorzugsweise 0,2 bis 5 Gew.-%, bezogen auf die Monomeren. Die Polymerisationsinitiatoren werden in Mengen von 0,5 bis 20, vorzugsweise 2 bis 18 Gew.-%, bezogen auf die Monomeren, eingesetzt. Sofern Homopolymerisate oder Copolymerisate mit einem höheren Maleinsäuregehalt hergestellt werden, verwendet man eine höhere Initiatormenge innerhalb des oben beschriebenen Bereichs, während bei der Herstellung von Copolymerisaten mit Gehalten an einpolymerisierter Maleinsäure im Bereich von 65 bis ca. 80 Gew.-% Initiatormengen in dem Bereich von 0,5 bis 12 Gew.-% eingesetzt werden.

Man unterwirft wäßrige Lösungen der Monomeren der Polymerisation. Die Konzentrationen der Monomeren in der wäßrigen Lösung betragen üblicherweise 10 bis 70, vorzugsweise 20 bis 60 Gew.-%. Die Polymerisation der Monomeren erfolgt üblicherweise in dem Temperaturbereich von 70 bis 150, vorzugsweise 80 bis 130°C. Besonders bevorzugt wird unter Siedebedingungen des Reaktionsgemisches polymerisiert. Bei Polymerisationstemperaturen, die oberhalb des Siedepunkts des Reaktionsgemisches liegen, arbeitet man in entsprechend ausgelegten Druckapparaturen. Die Polymerisation kann selbstverständlich auch unter vermindertem Druck durchgeführt werden. Am einfachsten erfolgt sie jedoch bei dem jeweiligen Atmosphärendruck. Wie bei Polymerisationen üblich, wird unter Ausschluß von Sauerstoff polymerisiert, z.B. in einer Inertgasatmosphäre, z.B. unter Stickstoff. Während der Polymerisation wird vorzugsweise für eine gute Durchmischung der Reaktionspartner gesorgt. Dies kann beispielsweise in allen Reaktoren vorgenommen werden, die mit einem Rührer ausgestattet sind, z.B. Reaktoren mit Ankerrührern.

Erfindungsgemäß wird der Neutralisationsgrad der Säuregruppen enthaltenden Monomeren während der Homo- und Copolymerisation auf 52 bis 70 % eingestellt, so daß unmittelbar nach Beendigung der Polymerisation partiell neutralisierte Copolymerisate vorliegen, bei denen die einpolymerisierten Säuregruppen enthaltenden Monomeren zu 52 bis 70 %, vorzugsweise 55 bis 65 %, neutralisiert sind.

Bei der Herstellung von Copolymerisaten durch Copolymerisieren der Monomeren (a) mit den Säuregruppen enthaltenden Comonomeren (c) kann man zunächst einen Neutralisationsgrad der Monomeren (a) einstellen, der oberhalb des Bereiches von 52 bis 70 % liegt, wenn man die Säuregruppen enthaltenden Monomeren (c) anschließend in nicht neutralisierter Form zu den vorgelegten und bis zu 85 % neutralisierten Monomeren (a) zugibt. Nach Beendigung der Dosierung der Monomeren (c) liegt dann auch in diesem Fall ein partiell neutralisiertes Copolymerisat mit einem Neutralisationsgrad der einpolymerisierten Säuregruppen von 52 bis 70, vorzugsweise 55 bis 65 %, vor. Sofern man Copolymerisate aus den Monomeren (a) und (b) bzw. Copolymerisate aus (a) und säuregruppen-freien Monomeren (c) und gegebenenfalls Monomeren (d) oder Copolymerisate aus den Monomeren (a), (b), säuregruppen-freien Monomeren (c) und gegebenenfalls Monomeren (d) copolymerisiert, legt man vorzugsweise die Monomeren der Gruppe (a) in Form einer 10 bis 70 %igen wäßrigen Lösung mit einem Neutralisationsgrad von 52 bis 70 %, vorzugsweise 55 bis 65 %, vor und fügt die Comonomeren und den Initiator anschließend dem Reaktionsgemisch nach Maßgabe des Fortschritts der Copolymerisation zu, d.h. die Comonomeren und der Initiator werden mit einer solchen Geschwindigkeit zum Reaktionsgemisch zugegeben, daß die Polymerisationsreaktion gut beherrschbar ist, so daß die Polymerisationswärme sicher abgeführt werden kann.

Eine andere Möglichkeit, den Neutralisationsgrad in dem oben genannten Bereich während der Copolymerisation der Monomeren (a) mit den Säuregruppen enthaltenden Monomeren (c) und gegebenenfalls (b) und gegebenenfalls (d) aufrechtzuerhalten, besteht darin, daß man die Monomeren (a) in wäßriger Lösung zu 52 bis 70 % neutralisiert und die Säuregruppen enthaltenden Monomeren (c) sowie gegebenenfalls die übrigen Comonomeren der vorgelegten wäßrigen Lösung der partiell neutralisierten Monomeren (a) zusammen mit einer Base zuzugeben, so daß das Säuregruppen enthaltende Monomer (c) ebenfalls

4

einen Neutralisationsgrad in dem Bereich von 52 bis 70 %, vorzugsweise 55 bis 65 %, aufweist. Das säuregruppenhaltige Monomer (c) kann jedoch auch bereits in partiell neutralisierter Form, die in dem angegebenen Bereich liegt, zu der vorgelegten wäßrigen, partiell neutralisierten Lösung des Monomeren (a) zugegeben werden. Das Säuregruppen enthaltende Monomer (c) kann jedoch auch bei geringeren Neutralisationsgraden als 52 % zu einem zu mindestens 60 % neutralisierten Monomer (a) zugegeben werden. Wesentlich ist dabei lediglich, daß die in das Copolymerisat einpolymerisierten Säuregruppen enthaltenden Einheiten (c) und (a) einen Gesamtneutralisationsgrad von 52 bis 70 % aufweisen. Manchmal kann es jedoch auch zweckmäßig sein, das Säuregruppen enthaltende Monomere (c) in teil- oder vollneutralisierter Form zuzudosieren. In diesem Fall muß dann jedoch das vorgelegte Monomer (a) entsprechend weniger neutralisiert werden.

Gemäß einer Ausführungsform der Erfindung werden Copolymerisate aus den Monomeren (a), (b) und (c) im Gewichtsverhältnis (a) : (b) : (c) von (99 bis 65) : (1 bis 35) : (1 bis 35) bei einem Gesamtneutralisationsgrad der Säuregruppen enthaltenden Monomeren von 55 bis 65 % hergestellt.

Zum Neutralisieren verwendet man Alkalimetallbasen, Ammoniak und/oder Amine. Vorzugsweise verwendet man Natriumhydroxid oder Kaliumhydroxid. Als Amine, die zur Neutralisation einsetzbar sind, eignen sich beispielsweise Ethanolamin, Diethanolamin, Triethanolamin, Morpholin und deren Mischungen.

Um farblose oder nur wenig gefärbte Homo- und Copolymerisate aus den Monomeren (a) bis (d) herzustellen, führt man die Polymerisation zweckmäßigerweise in Gegenwart von wasserlöslichen Phosphorverbindungen durch, in denen der Phosphor eine Oxidationszahl von 1 bis 4 hat, deren wasserlöslichen Alkali- oder Ammoniumsalzen, wasserlöslichen $-PO(OH)_2$-Gruppen enthaltenden Verbindungen und/oder deren wasserlöslichen Salzen. Vorzugsweise verwendet man phosphorige Säure. Die in Betracht kommenden Phosphorverbindungen werden zur Verringerung der Verfärbung der Polymerisate in Mengen von 0,01 bis 5 Gew.-%, bezogen auf die eingesetzten Monomeren, angewendet. Die in Betracht kommenden Phosphorverbindungen sind im Zusammenhang mit einem anderen Polymerisationsverfahren in der EP-A-0175317 beschrieben.

Nach dem erfindungsgemäßen Verfahren erhält man Polymerisate mit K-Werten von 7 bis 50, vorzugsweise 8 bis 30 (gemessen bei 25°C an den auf pH 7 mit Natronlauge eingestellten 1 %igen wäßrigen Lösungen der Polymerisate). Die Homo- und Copolymerisate, die nach dem erfindungsgemäßen Verfahren erhältlich sind, weisen relativ geringe Gehalte an Restmonomeren der Gruppe (a) auf. Der Restmonomergehalt an Maleinsäure liegt beispielsweise bei höchstens 1,5 %, berechnet auf Feststoff. Die so erhältlichen Polymerisate können daher direkt der vorgesehenen Verwendung zugeführt oder nach vollständiger Neutralisation verwendet werden. Die Homo- und Copolymerisate sind beispielsweise als Zusatz zu Wasch- und Geschirrspülmitteln in Mengen von 0,1 bis 15 Gew.-%, jeweils bezogen auf die gesamte Formulierung, einsetzbar.

Geschirrspülmittel enthalten beispielsweise 5 bis 20 Gew.-% eines Ammonium- oder Alkalimetallcarbonats oder eines Ammonium- oder Alkalimetallsulfats, mindestens 2 Gew.-% Alkalisilikat und 0,5 bis 8 Gew.-% eines schaumarmen Tensids sowie als weitere wesentliche Komponente ein nach dem erfindungsgemäßen Verfahren erhältliches Polymerisat. Die Geschirrspülmittel können bis zu 94 Gew.-% Natriumsilikat und bis zu etwa 50 Gew.-% Ammonium- oder Alkalimetallcarbonate bzw. -sulfate enthalten. Weiterhin können enthalten sein: aktives Chlor abspaltende Verbindungen, wie beispielsweise Kalium- oder Natriumsalze von Dichlorisocyanurat, wobei der Aktivchlorgehalt der Formulierung bis zu 3 Gew.-% betragen kann. Zusätzlich können noch Glukonsäure oder Glukoheptonsäure oder deren Alkalisalze in Mengen bis zu 20 Gew.% enthalten sein. Die Geschirrspülmittel können gegebenenfalls weitere übliche Zusätze, wie beispielsweise Schaumdämpfer, Farbstoffe, Geruchsstoffe, Staubbindemittel und bereits im Handel befindliche Polymere wie z.B. Polyacrylate oder Copolymere aus 70 Gew.-% Acrylsäure und 30 Gew.-% Maleinsäure in den dafür üblichen Dosierungen enthalten. Da die Zusammensetzungen der Geschirrspülmittel stark variieren, sind die oben gemachten Angaben lediglich als grobe Anhaltspunkte für die Zusammensetzung zu verstehen.

Die nach dem erfindungsgemäßen verfahren erhältlichen Homo- und Copolymerisate können auch in Textilwaschmitteln eingesetzt werden. Hierfür ist es in vielen Fällen erforderlich, die bei der Polymerisation erhältlichen Polymerlösungen in üblichen Trocknern wie Walzentrocknern, Sprühtrocknern und Sprühwirbelschichttrocknern zu einem Pulver bzw. Granulat zu trocknen.

Die Polymerisate bewirken in den Waschmitteln eine inkrustationsinhibierende und eine pigmentschmutzdispergierende Wirkung. Sie sind sowohl in flüssigen als auch in pulverförmigen Wasch- und Reinigungsmitteln einsetzbar. Sie weisen gegenüber den aus der EP-PS 0 025 551 bekannten Copolymerisaten aus den Monomeren (a) und Säuregruppen enthaltenden Monomeren (c) vor allem eine verbesserte Verträglichkeit in flüssigen Waschmittelformulierungen auf.

5

Die Zusammensetzung von Waschmittelformulierungen können sehr unterschiedlich sein. Gleiches gilt für die Zusammensetzung von Reinigungsmittelformulierungen. Wasch- und Reinigungsmittelformulierungen enthalten üblicherweise Tenside und gegebenenfalls Builder. Diese Angaben gelten sowohl für flüssige als auch für pulverförmige Wasch- und Reinigungsmittelformulierungen. Beispiele für die Zusammensetzung von Waschmittelformulierungen, die in Europa, in den USA und in Japan gebräuchlich sind, findet man beispielsweise in Chemical and Engn. News, Band 67, 35 (1989) tabellarisch dargestellt sowie in Ullmanns Encyklopädie der technischen Chemie, Verlag Chemie, Weinheim 1983, 4. Auflage, Seiten 63-160.

Die oben beschriebenen Polymerisate werden erfindungsgemäß in Waschmitteln eingesetzt, die bis zu 45 Gew.-% Phosphat enthalten, wobei die Verwendung der Polymerisate in Waschmitteln mit reduziertem Phosphatgehalt (darunter soll ein Phosphatgehalt von weniger als 25 Gew.% Natriumtriphosphat verstanden werden) oder in phosphatfreien Waschmitteln sowie in Reinigungsmitteln bevorzugt ist. Die Polymerisate können dabei in Form eines Granulats, einer Paste, einer hochviskosen Masse, als Dispersion oder als Lösung in einem Lösemittel der Waschmittelformulierung zugegeben werden. Die Polymerisate können auch an der Oberfläche von Stellmitteln, z.B. Natriumsulfat oder Gerüststoffen (Zeolithen oder Bentoniten) sowie anderen festen Hilfsstoffen der Waschmittelformulierung adsorbiert werden.

Waschmittelformulierungen und Reinigungsmittelformulierungen sind pulverförmig oder flüssig. Sie können regional und gemäß dem speziellen Anwendungszweck verschieden zusammengesetzt sein.

Universalhaushaltswaschmittel für Trommelwaschmaschinen, wie sie in Europa weit verbreitet sind, enthalten gewöhnlich 5 bis 10 Gew.% Aniontenside; 1 bis 5 Gew.% nichtionische Tenside; 1 bis 5 Gew.% Schaumregulatoren, wie Silikonöle oder Seifen; 0 bis 40 Gew.% Enthärtungsmittel, wie Soda oder Pentanatriumtriphosphat, das durch die erfindungsgemäßen Verbindungen teilweise oder ganz ersetzt werden kann; 0 bis 30 Gew.% Ionenaustauscher, wie Zeolith A; 2 bis 7 Gew.% Natriumsilikate als Korrosionsinhibitoren; 10 bis 30 Gew.% Bleichmittel, wie Natriumperborat, Natriumpercarbonat organische Persäuren oder deren Salze; 0 bis 5 Gew.% Bleichaktivatoren, wie Tetraacetylethylendiamin, Pentaacetylglucose, Hexaacetylsorbit oder Acyloxibenzolsulfonat; Stabilisatoren, wie Magnesiumsilikat oder Ethylendiamintetraacetat; Vergrauungsinhibitoren, wie Carboximethylcellulose, Methyl- und Hydroxialkylcellulosen, mit Vinylacetat gepfropfte Polyglykole, oligomere und polymere Terephthalsäure/Ethylenglykol/Polyethylenglykol-Ester; Enzyme; optische Aufheller; Duftstoffe; Weichmacher; Farbstoffe und Stellmittel.

Im Gegensatz hierzu sind die Heavy Duty Detergents, die in den USA, Japan und diesen Ländern benachbarten Staaten in den Bottichwaschmaschinen verwendet werden, meist frei von Bleichmitteln, ihr Anteil an Aniontensiden ist dafür zwei bis dreimal so hoch, sie enthalten mehr Waschalkalien, wie Soda und Natriumsilikate (in der Regel bis zu 25 Gew.%) und zumeist fehlen ihnen auch die Bleichaktivatoren und Bleichstabilisatoren. Die Gehaltsangaben für Tenside und andere Inhaltsstoffe können sich noch beträchtlich erhöhen, wenn es sich um sogenannte Waschmittelkonzentrate handelt, die stellmittelfrei oder stellmittelarm in den Handel kommen. Fein- und Buntwaschmittel, Wollwaschmittel und Mittel für die manuelle Wäsche enthalten ebenfalls meist kein Bleichmittel und geringe alkalische Bestandteile bei entsprechend erhöhtem Tensidanteil.

Waschmittel für den gewerblichen Sektor sind auf die speziellen Verhältnisse des industriellen Waschens zugeschnitten (weiches Wasser, kontinuierliches Waschen), die es gestatten, schwerpunktmäßig auf die Art des Waschguts und der Verschmutzung einzugehen. Es werden daher Kombinationen verwendet, in denen ein Bestandteil vorherrscht oder andere ganz fehlen, die bei Bedarf getrennt zudosiert werden. Deshalb variieren die Bestandteile Tenside, Builder (Gerüststoffe), Alkalien und Bleichmittel dieser Waschmittel in weiten Grenzen.

Geeignete anionische Tenside für die vorgenannten Pulverwaschmittel sind beispielsweise Natriumalkylbenzolsulfonate, Fettalkoholsulfate und Fettalkoholpolyglykolethersulfate. Einzelne Verbindungen dieser Art sind beispielsweise $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Als anionische Tenside eignen sich außerdem sulfatierte Fettsäurealkanolamine, $\alpha$-Sulfofettsäureester, Fettsäuremonoglyceride oder Umsetzungsprodukte von 1 bis 4 Mol Ethylenoxid mit primären oder sekundären Fettalkolen oder Alkylphenolen. Weitere geeignete anionische Tenside sind Fettsäureester bzw. Fettsäureamide von Hydroxy- oder Aminocarbonsäuren bzw. -sulfonsäuren, wie beispielsweise die Fettsäuresarkoside, -glykolate, -lactate, -tauride oder -isothionate. Die anionischen Tenside können in Form der Natrium-, Kalium- und Ammoniumsalze sowie als lösliche Salze organischer Basen, wie Mono-, Di- oder Triethanolamin oder andere substituierter Amine vorliegen. Zu den anionischen Tensiden gehören auch die üblichen Seifen, d.h. die Alkalisalze der natürlichen Fettsäuren.

Als nichtionische Tenside (Nonionics) sind z.B. Anlagerungsprodukte von 3 bis 40, vorzugsweise 4 bis 20 Mol Ethylenoxid an 1 Mol Fettalkohol, Alkylphenol, Fettsäure, Fettamin, Fettsäureamid oder Alkansulfo-

6

namid verwendbar. Die obengenannten Anlagerungsprodukte des Ethylenoxids können gegebenenfalls zusätzlich bis zu 90 Gew.-%, bezogen auf einkondensiertes Ethylenoxid und Propylenoxid, Propylenoxid einkondensiert enthalten. Die Anlagerungsprodukte, die Ethylenoxid und Propylenoxid einkondensiert enthalten, können gegebenenfalls durch Einkondensieren von Butylenoxid in Mengen bis zu 60 Gew.-%, bezogen auf den Gesamtgehalt an Alkylenoxid, modifiziert sein. Besonders wichtig sind die Anlagerungsprodukte von 5 bis 16 Mol Ethylenoxid an Kokos- oder Talgfettalkohole, an Oleylalkohol oder an synthetische Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykolether, Alkylendiaminopolypropylenglykol und Alkylpolypropylenglykole mit 1 bis 10 C-Atomen in der Alkylkette brauchbar, in denen die Polypropylenglykoletherkette als hydrophober Rest fungiert.

Auch nichtionische Tenside vom Typ der Aminoxide oder Sulfoxide sind verwendbar.

Das Schaumvermögen der Tenside läßt sich durch Kombination geeigneter Tensidtypen steigern oder verringern. Eine Verringerung läßt sich ebenfalls durch Zusätze von nichttensidartigen organischen Substanzen erreichen.

Weitere Mischungsbestandteile von Waschmitteln können auch monomere, oligomere und polymere Phosphonate, Ethersulfonate auf der Basis von ungesättigten Fettalkoholen, z.B. Oleylalkoholethoxylatbutylether und deren Alkalisalze sein. Diese Stoffe können z.B. mit Hilfe der Formel $RO(CH_2CH_2O)_n$-$C_4H_8$-$SO_3Na$, in der n = 5 bis 40 und R = Oleyl ist, charakterisiert werden.

Die oben beschriebenen Polymerisate können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Polymerisate mit den übrigen Bestandteilen des Flüssigwaschmittels nicht direkt mischbar sind, kann man mit Hilfe geringer Menge an Lösungsvermittlern, z.B. Wasser oder eines mit Wasser mischbaren organischen Lösemittel, z.B. Isopropanol, Methanol, Ethanol, Glykol, Diethylenglykol oder Triethylenglykol oder entsprechende Propylenglykole, homogene Mischungen herstellen. Die Tensidmenge in Flüssigwaschmitteln beträgt 4 bis 50 Gew.%, bezogen auf die gesamte Formulierung, da auch bei den Flüssigwaschmitteln je nach den regionalen Marktgegebenheiten oder dem Anwendungszweck die Anteile der Bestandteile in weiten Grenzen variieren.

Die Flüssigwaschmittel können Wasser in Mengen von 10 bis 60, vorzugsweise 20 bis 50 Gew.% enthalten. Sie können aber auch wasserfrei sein.

Wasserfreie Flüssigwaschmittel können auch Peroxoverbindungen zum Bleichen in suspendierter oder dispergierter Form enthalten. Als Peroxoverbindungen seien z.B. genannt: Natriumperborat, Peroxocarbonsäuren und Polymere mit teilweise peroxohaltigen Gruppen. Außerdem können die Flüssigwaschmittel gegebenenfalls Hydrotrope enthalten. Hierunter werden Verbindungen verstanden wie 1,2-Propandiol, Cumolsulfonat und Toluolsulfonat. Falls derartige Verbindungen zur Modifizierung der Flüssigwaschmittel eingesetzt werden, beträgt ihre Menge, bezogen auf das Gesamtgewicht des Flüssigwaschmittels, 2 bis 5 Gew.%. In vielen Fällen hat sich zur Modifizierung von pulverförmigen und flüssigen Waschmitteln auch ein Zusatz von Komplexbildnern als vorteilhaft erwiesen. Komplexbildner sind beispielsweise Ethylendiamintetraessigsäure, Nitrilotriacetat und Isoserindiessigsäure sowie Phosphonate, wie Aminotrismethylenphosphonsäure, Hydroxyethandiphosphonsäure,Ethylendiamintetraethylenphosphonsäure und deren Salze. Die Komplexbildner werden in Mengen von 0 bis 10 Gew.%, bezogen auf die Waschmittel, eingesetzt. Die Waschmittel können außerdem Zitrate, Di- oder Triethanolamin, Trübungsmittel, optische Aufheller, Enzyme, Parfümöle und Farbstoffe enthalten. Diese Stoffe sind, falls sie zur Modifizierung der Flüssigwaschmittel verwendet werden, zusammen in Mengen bis zu 5 Gew.% anwesend. Die Waschmittel sind vorzugsweise phosphatfrei. Sie können jedoch auch Phosphate enthalten, z.B. Pentanatriumtriphosphat und/oder Tetrakaliumpyrophosphat. Falls Phosphate eingesetzt werden, beträgt der Anteil der Phosphate an der Gesamtformulierung des Waschmittels bis zu 45, vorzugsweise bis zu 25 Gew.%.

Die Polymerisate können auch mit anderen bekannten Waschmitteladditiven (wie z.B. Vergrauungsinhibitoren, Claydispergatoren und Stoffen, die die Primärwaschwirkung verstärken, Farbübertragungsinhibitoren, Bleichaktivatoren) in Pulver- und Flüssigwaschmitteln (phosphathaltig und phosphatfrei) synergistische Effekte hervorrufen, bei denen nicht nur die Vergrauungsinhibierung, sondern auch die Wirkung des anderen Waschmitteladditivs verstärkt werden kann.

Die K-Werte wurden nach H. Fikentscher, Cellulosechemie, Band 13, 58 bis 64 und 71 bis 74 (1932), bestimmt. Dabei bedeutet $K = k \cdot 10^3$. Die Messungen wurden an 1 %igen wäßrigen Lösungen der Natriumsalze der Polymerisate bei 25°C und einem pH-Wert von 7 durchgeführt. Die Bestimmung der Restgehalte an monomerer Maleinsäure in den Polymerisaten erfolgte auf polarographischem Wege. Die Angaben in Prozent für restliche Maleinsäure im Polymerisat sind auf Feststoff berechnet. Die Angaben in Prozent sind Gewichtsprozent.

Beispiele 1 bis 4 und Vergleichsbeispiel 1

In einem beheizbaren Reaktor, der mit Rührer, Rückflußkühler, Thermometer, Zulaufvorrichtung und Stickstoffeinlaß ausgestattet ist, werden 300 g Wasser, 380,17 g Maleinsäureanhydrid, 3 g 50 %ige wäßrige phosphorige Säure, 20 ml einer 0,035 %igen wäßrigen Lösung von Ammoniumeisen-II-sulfat und die in der Tabelle 1 genannte Menge an Natriumhydroxid vorgelegt und bis zum Sieden unter Stickstoff erhitzt. Zu der siedenden Lösung, die fortlaufend gerührt wird, gibt man innerhalb von 5 Stunden eine Lösung von 50 g Hydroxipropylacrylat in 80 g Wasser und innerhalb von 6 Stunden getrennt davon 266 g 30 %iges Wasserstoffperoxid zu. Die Polymerisation wird unter Sieden des Reaktionsgemisches durchgeführt. Nach Beendigung der Wasserstoffperoxidzugabe wird das Reaktionsgemisch noch jeweils 2 Stunden zum Sieden erhitzt. Anschließend wird durch Zugabe der in Tabelle 1 angegebenen Mengen an 50 %iger wäßriger Natronlauge bis zu einem pH-Wert von 6,8 neutralisiert. In Tabelle 1 sind der Feststoffgehalt der Polymerlösungen, der K-Wert der Polymerisate sowie der Gehalt an nicht polymerisierter Maleinsäure im Copolymerisat angegeben.

Tabelle 1

| Beisp. Nr. | NaOH-Menge | | NaOH 50 %ig zur Neutralisation der Polymerlösung [Menge in g] | Feststoffgehalt [%] | K-Wert | restliche Maleinsäure [%] |
|---|---|---|---|---|---|---|
| | [g] | Neutralisationsgrad [%] | | | | |
| 1 | 170,70 | 55 | 115 | 45,4 | 12,0 | 0,56 |
| 2 | 186,20 | 60 | 90 | 45,6 | 11,6 | 0,28 |
| 3 | 201,70 | 65 | 75 | 44,8 | 10,5 | 0,71 |
| 4 | 217,24 | 70 | 56 | 45,4 | 10,2 | 1,48 |
| Vergl. beisp. | | | | | | |
| 1 | 155,17 | 50 | 139 | 43,8 | 11,1 | 2,29 |

Beispiele 5 bis 10 und Vergleichsbeispiele 2 bis 4

In dem in Beispiel 1 beschriebenen Reaktor werden jeweils 300 g Wasser, 338 g Maleinsäureanhydrid und die in der Tabelle 2 genannten Mengen an Natriumhydroxid vorgelegt und zum Sieden erhitzt. Zu der siedenden Mischung gibt man innerhalb von 5 Stunden eine Lösung von 100 g Acrylsäure in 110 g Wasser und separat davon innerhalb von 6 Stunden eine Lösung von 20 g Natriumpersulfat in 70 g Wasser und eine Lösung von 66,6 g 30 %igem Wasserstoffperoxid in 23,34 g Wasser gleichmäßig zu und führt die Polymerisation unter Sieden des Reaktionsgemisches durch. Nach Beendigung der Initiatorzugabe wird das Reaktionsgemisch noch 2 Stunden zum Sieden erhitzt. Man erhält klare, gelbliche Polymerisatlösungen, deren Feststoffgehalt in Tabelle 2 angegeben ist. In Tabelle 2 ist ebenfalls der K-Wert der Polymerisate sowie der Restgehalt an Maleinsäure aufgeführt.

8

Tabelle 2

| Beisp. Nr. | NaOH-Menge zur Vorlage | | | Feststoffgehalt [%] | K-Wert | restliche Maleinsäure [%] |
|---|---|---|---|---|---|---|
| | Neutralisationsgrad | | | | | |
| | [g] | [%] | | | | |
| | | der Vorlage | nach Zulaufende | | | |
| 5 | 231,77 | 84 | 69,9 | 53,3 | 17,2 | 1,00 |
| 6 | 221,74 | 80 | 66,6 | 52,8 | 18,1 | 0,47 |
| 7 | 213,84 | 77,5 | 64,5 | 52,9 | 20,0 | 0,16 |
| 8 | 206,94 | 75,0 | 62,4 | 52,6 | 18,7 | 0,35 |
| 9 | 193,14 | 70 | 58,2 | 52,6 | 20,8 | 0,55 |
| 10 | 179,35 | 65 | 54,2 | 52,5 | 20,4 | 1,48 |
| Vergl. beisp. Nr. | | | | | | |
| 2 | 248,33 | 90 | 74,9 | 53,7 | 15,7 | 1,87 |
| 3 | 165,55 | 60 | 49,5 | 52,1 | 20,0 | 4,39 |
| 4 | 137,96 | 50 | 41,6 | 49,8 | 15,0 | 11,30 |

Beispiel 11

In dem im Beispiel 1 angegebenen Reaktor werden 270 g Wasser, 401,3 g Maleinsäureanhydrid und 213,42 g Natriumhydroxid vorgelegt und zum Sieden erhitzt. Unmittelbar nach Siedebeginn wird innerhalb von 5 Stunden eine Lösung von 25 g Acrylsäure in 80 g Wasser und innerhalb von 6 Stunden eine Lösung von 50 g Natriumpersulfat in 120 g Wasser und separat davon 100 g 50 %iges Wasserstoffperoxid gleichmäßig zudosiert, wobei man das Reaktionsgemisch beim Siedepunkt polymerisiert. Nach Initiatorzugabe wird das Reaktionsgemisch noch 2 Stunden zum Sieden erhitzt und anschließend durch Zugabe von 100 g 50 %iger wäßriger Natronlauge neutralisiert. Der Neutralisationsgrad der Vorlage betrug ca. 65 %. Nach Beendigung der Acrylsäurezugabe betrug der gesamte Neutralisationsgrad der Carbonsäuregruppen im Copolymerisat 62,5 %. Die erhaltene klare, bräunliche Lösung hatte einen Feststoffgehalt von 53,4 %. Das Copolymerisat hatte einen K-Wert von 12,1 und enthielt 0,12 % monomere Maleinsäure.

Beispiel 12

In dem in Beispiel 1 beschriebenen Reaktor werden 300 g Wasser, 388 g Maleinsäureanhydrid, 7 ml einer 0,1 %igen wäßrigen Lösung von Ammoniumeisen-II-sulfat und 193,15 g Natriumhydroxid gemischt und zum Sieden erhitzt. Unmittelbar nach Siedebeginn wird innerhalb von 5 Stunden eine Lösung von 50 g Acrylsäure, 95,35 g 58 %iger wäßriger Lösung von Acrylamidomethylpropansulfonsäure-natriumsalz und 30,6 g Wasser und innerhalb von 6 Stunden nach Siedebeginn eine Lösung von 40 g Natriumpersulfat in 120 g Wasser und 133,33 g 30 %iges Wasserstoffperoxid gleichmäßig zudosiert. Nach Beendigung der Initiatorzugabe wird das Reaktionsgemisch noch eine Stunde zum Sieden erhitzt und anschließend mit 50 %iger wäßriger Natronlauge bis zu einem pH-Wert von 7,0 neutralisiert. Die so erhältliche schwach trübe, braune Lösung besitzt einen Feststoffgehalt von 50,8 %. Das Copolymerisat hat einen K-Wert von 13,3 und enthielt 1,06 % an monomerer Maleinsäure.

Beispiel 13

Anwendungstechnische Prüfung der Polymerisate als Geschirrspülmitteladditiv

Folgende pulverförmige Geschirrspülmittelformulierungen wurden bei dem Beispiel gemäß Erfindung und den Vergleichsbeispielen getestet:
32 Teile Natriumsulfat
55 Teile Natriummetasilikat (wasserfrei)
5 Teile Natriumkarbonat (wasserfrei)

3 Teile des Anlagerungsprodukts von 2 Mol Ethylenoxid und 4 Mol Propylenoxid an 1 Mol $C_{13}/C_{15}$-Fettalkohol

5 Teile Polymerisat

Die Formulierung wurde durch Mischen der obengenannten Produkte erhalten. Als Polymerisate wurden die in der folgenden Tabelle jeweils angegebenen Produkte untersucht. Zur Prüfung der einzelnen Formulierungen verwendete man jeweils 2 g der Formulierung pro Liter Trinkwasser (18° deutscher Härte) und erhitzte die wäßrige Lösung der Formulierung auf 80°C. Man tauchte dann Bestecke ein, rührte die Lösung mit Hilfe eines Magnetrührers 5 Minuten und ließ die Bestecke noch 5 Minuten in der wäßrigen Geschirrspülmittelflotte bei 80°C stehen. Danach wurden die Bestecke ungespült bei 23°C getrocknet und die Belagbildung mit Hilfe einer Bewertungsskala, deren Noten von 1 bis 5 reichten, bewertet. Die Note 1 bedeutet ein schlechtes Ergebnis, d.h. deutlich sichtbarer weißer Belag, während die Note 5 für sehr gut, d.h. kein Belag steht. Die bei den einzelnen Formulierungen jeweils eingesetzten Polymerisate sowie die Ergebnisse sind in der Tabelle 3 angegeben.

Tabelle 3

| Bsp. | Vgl. bsp. | Polymerisat (im Geschirrspülmittel) | K-Wert | Beurteilung des Waschergebnisses unter Verwendung des Polymerisats im Geschirrspülmittel (Note) |
|---|---|---|---|---|
| – | 5 | Polyacrylsäure, Na-Salz | 20 | 1,5 bis 2 |
| – | 6 | Polyacrylsäure, Na-Salz | 40 | 1,5 |
| – | 7 | Copolymerisat aus 70 Gew.-% Acrylsäure und 30 Gew.% Maleinsäure | 60 | 1,5 bis 2 |
| 13 | – | Copolymerisat gemäß Beispiel 2 | 11,6 | 4,5 |

EP 0 451 508 B1

Beispiel 14

Anwendungstechnische Prüfung der Polymerisate als Waschmitteladditiv

Als Vergleich wird ein handelsübliches Copolymerisat aus 70 Gew.-% Acrylsäure und 30 Gew.-% Maleinsäure in Form des Natriumsalzes vom K-Wert 60 eingesetzt. Dieses Copolymerisat wird im folgenden mit Vergleichspolymer 1 bezeichnet.

Es wird die inkrustationsinhibierende Wirkung und die schmutzdispergierende (Clay-Dispergiertest) bestimmt.

Inkrustationsinhibitorwirkung

Um die inkrustierungsinhibierende Wirkung der beschriebenen Polymerisate zu testen, wurden die Polymerisate jeweils in ein phosphatfreies pulverförmiges Waschmittel eingearbeitet. Mit dieser Waschmittelformulierung wurden Testgewebe aus Baumwollgewebe gewaschen. Die Zahl der Waschzyklen betrug 10. Nach jedem Zyklus wurde das Gewebe trockengebügelt. Nach dieser Anzahl von Wäschen wurde der Aschegehalt des Gewebes ermittelt, indem man das Testgewebe jeweils veraschte. Je wirksamer das im Waschmittel enthaltende Polymerisat ist, desto geringer ist der Aschegehalt des Testgewebes.

Versuchsbedingungen für die Ermittlung der Inkrustierung:

| Gerät: | Launder-O-Meter der Fa. Atlas, Chicago |
| Zahl der Waschzyklen: | 10 |
| Waschflotte: | 250 g, wobei das verwendete Wasser 4mMol Härte pro Liter aufweist (Molverhältnis Calcium zu Magnesium = 3 : 1) |
| Waschdauer: | 30 min bei 60 °C (einschließlich Aufheizzeit) |
| Waschmitteldosierung: | 8 g/l |
| Baumwollgewebe: | 20 g |

Waschmittel (phosphatfrei)

12,5 % Dodecylbenzolsulfonat (50 %)
4,7 % $C_3/C_{15}$-Oxoalkoholpolyglykolether, der 7 Ethylenoxid-Einheiten enthält
2,8 % Seife
25 % Zeolith A
12 % Natriumcarbonat
4 % Na-Disilikat
1 % Mg-Silikat
20 % Natriumperborat
5 % Copolymerisat gemäß Beispiel oder Vergleichsbeispiel (berechnet 100 %ig)
0,6 % Na-Carboxymethylcellulose
Rest auf 100 % Natriumsulfat
Wirksamkeit bezüglich der Inkrustationsinhibierung der Polymeren

| Zusatz an Copolymer zur Waschmittelformulierung | Aschegehalt [%] |
| --- | --- |
| ohne Polymer-Zusatz | 1,29 |
| Vergleichspolymer 1 | 0,57 |
| Polymer gemäß Beispiel 8 | 0,59 |
| Polymer gemäß Beispiel 9 | 0,49 |

Clay-Dispergierung

Die Entfernung von Partikelschmutz von Gewebeoberflächen wird durch Zusatz von Polyelektrolyten unterstützt. Die Stabilisierung der nach der Ablösung der Partikel von der Gewebeoberfläche entstehenden Dispersion ist eine wichtige Aufgabe dieser Polyelektrolyte. Der stabilisierende Einfluß der anionischen

EP 0 451 508 B1

Dispergiermittel ergibt sich dadurch, daß infolge von Adsorption von Dispergiermittelmolekülen auf der Feststoffoberfläche deren Oberflächenladung vergrößert und die Abstoßungsenergie erhöht wird. Weitere Einflußgrößen auf die Stabilität einer Dispersion sind ferner u.a. sterische Effekte, Temperatur, pH-wert und die Elektrolytkonzentration.

Mit dem im folgenden beschriebenen Clay-Dispergiertest (CD-Test) kann auf einfache Weise die Dispergierfähigkeit verschiedener Polyelektrolyte beurteilt werden.

CD-Test

Als Modell für partikulären Schmutz wird feingemahlener China-Clay SPS 151 benutzt. 1 g Clay wird unter Zusatz von 1 ml einer 0,1 %igen Natriumsalzlösung des Polyelektrolyten in 98 ml Wasser 10 min in einem Standzylinder (100 ml) intensiv dispergiert. Sofort nach dem Rühren nimmt man aus der Mitte des Standzylinders eine Probe von 2,5 ml und bestimmt nach dem Verdünnen mit Wasser auf 25 ml die Trübung der Dispersion mit einem Turbidimeter. Nach 30- bzw. 60minütiger Standzeit der Dispersion werden erneut Proben genommen und wie oben die Trübung bestimmt. Die Trübung der Dispersion wird in NTU (nephelometric turbidity units) angegeben. Je weniger sich die Dispersion während der Lagerung absetzt, um so höher sind die gemessenen Trübnungswerte und um so stabiler ist die Dispersion.

Als zweite physikalische Meßgröße wird die Dispersionskonstante $\tau$ bestimmt, die das zeitliche Verhalten des Sedimentationsprozesses beschreibt. Da der Sedimentationsprozeß annähernd durch ein monoexponentielles Zeitgesetz beschrieben werden kann, gibt $\tau$ die Zeit an, in der die Trübung auf 1/e-tel des Ausgangszustandes zum Zeitpunkt t = 0 abfällt.

Je höher der Wert für $\tau$ ist, um so langsamer setzt sich die Dispersion ab.

Clay-Dispergiertest

| geprüfte Substanz | Trübung in NTU | | | Dispersions- |
| | | nach Lagerung | | konstante $\tau$ |
| | sofort | 30 Min. | 60 Min. | |
| --- | --- | --- | --- | --- |
| ohne Polymer | 600 | 37 | 33 | 41,4 |
| Vergleichspolymer 1 | 640 | 470 | 380 | 97,2 |
| Polymer gemäß Beispiel 8 | 660 | 550 | 500 | 234,9 |
| Polymer gemäß Beispiel 9 | 600 | 540 | 500 | 261,0 |

Es ist die Überlegenheit der erfindungsgemäßen Copolymeren gegenüber einem handelsüblichen Copolymer mit geringerem Maleinsäureanteil zu ersehen. Bei etwa vergleichbarer Inkrustationsinhibitorwirkung ist das erfindungsgemäße Copolymere im Clay-Dispergiertest, einem Maß für die Primärwaschwirkung, deutlich wirksamer.

**Patentansprüche**

1. Verfahren zur Herstellung von Homo- und Copolymerisaten monoethylenisch ungesättigter Dicarbonsäuren mit K-Werten von 7 bis 50 (bestimmt nach H. Fikentscher am Na-Salz der Polymerisate bei pH 7 und 25 ° C in 1 %iger wäßriger Lösung) durch radikalisch initiierte Polymerisation von
   (a) monoethylenisch ungesättigten $C_4$- bis $C_8$-Dicarbonsäuren,
   (b) Hydroxy-$C_2$- bis $C_4$-alkylacrylaten und/oder Hydroxy-$C_2$- bis $C_4$-alkylmethacrylaten und
   (c) anderen wasserlöslichen monoethylenisch ungesättigten Monomeren
   im Gewichtsverhältnis (a) : (b) : (c) von (100 bis 65) : (0 bis 35) : (0 bis 35) in partiell neutralisierter Form in wäßriger Lösung, dadurch gekennzeichnet, daß man den Neutralisationsgrad der Säuregruppen enthaltenden Monomeren während der Polymerisation auf 52 bis 70 % einstellt, wobei der Neutralisationsgrad der Monomeren (a) im Fall der Herstellung von Copolymerisaten aus (a) und Säuregruppen enthaltenden Monomeren (c) zu Beginn der Polymerisation bis zu 85 % betragen kann und die Säuregruppen enthaltenden Monomeren (c) dann in nicht neutralisierter Form eingesetzt werden.

**2.** Verfahren nach Anspruch 1, dadurch gekennzeichnet, daß man Copolymerisate aus den Monomeren (a) und (b) im Gewichtsverhältnis (a) : (b) von (99 bis 65) : (1 bis 35) bei einem Neutralisationsgrad der Monomeren (a) von 55 bis 65 % herstellt.

**3.** Verfahren nach Anspruch 1, dadurch gekennzeichnet, daß man Copolymerisate aus den Monomeren (a) und (c) im Gewichtsverhältnis (a) : (c) von (99 bis 65) : (1 bis 35) herstellt, wobei man die Monomeren (a) im Polymerisationsreaktor vorlegt, sie bis zu einem Neutralisationsgrad von 85 % mit Alkalimetallbasen, Ammoniak oder Aminen neutralisiert und anschließend Initiator und Säuregruppen enthaltende Monomere (c) in nicht neutralisierter Form nach Maßgabe des Fortschritts der Polymerisation zufügt.

**4.** Verfahren nach Anspruch 1, dadurch gekennzeichnet, daß man Copolymerisate aus den Monomeren (a), (b) und (c) im Gewichtsverhältnis (a) : (b) : (c) von (99 bis 65) : (1 bis 35) : (1 bis 35) bei einem Gesamtneutralisationsgrad der Säuregruppen enthaltenden Monomeren von 55 bis 65 % herstellt.

## Claims

**1.** A process for preparing a homopolymer or copolymer of a monoethylenically unsaturated dicarboxylic acid having a K value of from 7 to 50 (determined after H. Fikentscher on the sodium salt of the polymer at pH 7 and 25°C in 1% strength aqueous solution) by free radical polymerization of

   (a) a monoethylenically unsaturated $C_4$-$C_8$-dicarboxylic acid,
   (b) a hydroxy-$C_2$-$C_4$-alkyl acrylate or methacrylate and
   (c) another water-soluble monoethylenically unsaturated monomer

in a weight ratio of (a) : (b) : (c) of (100 - 65) : (0 - 35) : (0 - 35) in partially neutralized form in aqueous solution, which comprises setting the degree of neutralization of the acid group-containing monomer(s) to 52-70% during the polymerization, which in the case of the preparation of a copolymer of (a) with an acid group-containing monomer (c), when the degree of neutralization of monomer (a) at the start may be as high as 85%, is achieved by using the acid group-containing monomer (c) in nonneutralized form.

**2.** A process as claimed in claim 1, wherein a copolymer is prepared from monomers (a) and (b) in a weight ratio of (a) : (b) of (99 - 65) : (1 - 35) at a degree of neutralization of monomer (a) of from 55 to 65%.

**3.** A process as claimed in claim 1, wherein a copolymer is prepared from monomers (a) and (c) in a weight ratio of (a) : (c) of (99 - 65) : (1 - 35) by introducing the monomer (a) into the polymerization reactor, neutralizing it up to 85% with an alkali metal base, ammonia or an amine and then adding an initiator and the acid group-containing monomer (c) in nonneutralized form at a rate commensurate with the rate of polymerization.

**4.** A process as claimed in claim 1, wherein a copolymer is prepared from monomers (a), (b) and (c) in a weight ratio of (a) : (b) : (c) of (99 - 65) : (1 - 35) : (1 - 35) at a total degree of neutralization of the acid group-containing monomers of from 55 to 65%.

## Revendications

**1.** Procédé de fabrication d'homopolymères et de copolymères d'acides dicarboxyliques monoéthyléniquement insaturés avec des valeurs K de 7 à 50 (déterminées selon H. Fikentscher sur le sel de sodium des polymères à un pH de 7 et à 25°C en solution aqueuse à 1%) par la polymérisation amorcée par des radicaux

   (a) d'acides dicarboxyliques en $C_4$ à $C_8$, monooléfiniquement insaturés,
   (b) d'acrylates d'hydroxyalkyle en $C_2$ à $C_4$ et/ou de méthacrylates d'hydroxyalkyle en $C_2$ à $C_4$ et
   (c) d'autres monomères monoéthyléniquement insaturés et solubles dans l'eau,

dans le rapport pondéral (a):(b):(c) de (100 à 65):(0 à 35):(0 à 35), sous forme partiellement neutralisée, en solution aqueuse, caractérisé en ce que l'on règle le degré de neutralisation des monomères contenant des radicaux acides au cours de la polymérisation de 52 à 70%, où le degré de neutralisation des monomères (a) dans le cas de la fabrication de copolymères constitués de (a) et de monomères contenant des radicaux acide (c), peut s'élever jusqu'à 85% au début de la polymérisation et les monomères contenant des radicaux acide (c) sont ensuite employés sous la forme non neutralisée.

2. Procédé suivant la revendication 1, caractérisé en ce que l'on fabrique des copolymères à partir des monomères (a) et (b) dans le rapport pondéral (a):(b) de (99 à 65):(1 à 35) à un degré de neutralisation des monomères (a) de 55 à 65%.

3. Procédé suivant la revendication 1, caractérisé en ce que l'on fabrique des copolymères constitués des monomères (a) et (c) dans le rapport pondéral (a):(c) de (99 à 65):(1 à 35), où on introduit au préalable les monomères (a) dans le réacteur de polymérisation, on les neutralise jusqu'à un degré de neutralisation de 85% avec des bases à métaux alcalins, de l'ammoniac ou des amines et on ajoute ensuite l'amorceur et les monomères contenant des radicaux acide (c) sous une forme non neutralisée au fur et à mesure du progrès de la polymérisation.

4. Procédé suivant la revendication 1, caractérisé en ce que l'on fabrique des copolymères constitués des monomères (a), (b) et (c) dans le rapport pondéral (a):(b):(c) de (99 à 65):(1 à 35):(1 à 35) à un degré de neutralisation total des monomères contenant des radicaux acides de 55 à 65%.